# EUROPEAN PATENT APPLICATION

(11) **EP 4 752 692 A1**
(43) Date of publication of application: **03.06.2026**
(21) Application number: 24844413.5
(22) Date of filing: 07.06.2024
(51) Int. Cl.: G06F 3/0481, G06F 3/0484, G06F 9/451

(54) **INFORMATION PRESENTATION METHOD AND APPARATUS, DEVICE, AND STORAGE MEDIUM**

(30) Priority: 25.07.2023 CN 202310923134
(71) Applicant: Beijing Zitiao Network Technology Co., Ltd., Beijing 100190 (CN)
(72) Inventor: DUAN, Yunshan, Beijing 100028 (CN); LI, Ziwei, Beijing 100028 (CN); ZHONG, Jiaxin, Beijing 100028 (CN); ZHAO, Tianshuang, Beijing 100028 (CN); LI, Peifeng, Beijing 100028 (CN); WANG, Tingting, Beijing 100028 (CN); ZHANG, Yimeng, Beijing 100028 (CN); TANG, Bo, Beijing 100028 (CN); TANG, Yuxi, Beijing 100028 (CN)
(74) Representative: Isarpatent
(86) International application number: PCT/CN2024/098276
(87) International publication number: WO 2025/020718

(57) **Abstract**

Embodiments of the disclosure provides a method apparatus, device, and storage medium for information. The method includes: presenting work information of a target user and user information of a first category of a plurality of categories of user information in an information presentation page of the target user, and respective category labels corresponding to the plurality of categories of user information are presented in the information presentation page; and in response to detecting a first switching for the user information, switching from the user information of the first category to user information of a second category in the information presentation page, with the presentation of the work information maintained. In this way, the display of the user information may be more reasonable, so that the user can quickly browse the information on the display page of the related information, and obtain a better browsing experience.

## Description

This application claims the benefit of Chinese Patent Application No. 202310923134X, entitled "Method, Apparatus, Device, and Storage Medium for Information Presenting," filed on July 25, 2023, the entire content of which is incorporated herein by reference.

### FIELD

Example embodiments of the present disclosure generally relate to the field of computers, and in particular, to a method, apparatus, device, and computer-readable storage medium for information presenting.

### BACKGROUND

Currently, more and more applications are designed to provide various services to users. For example, a user may post, browse, and view various types of content in an application, including multimedia content such as videos, images, image sets, sounds, and the like. The user may also interact with other users in the application, for example, giving a like, a favorite, commenting, etc., to a content posted by other users, or following other users, accessing personal homepages of other users, and the like.

### SUMMARY

In a first aspect of the present disclosure, there is provided a method for information presenting. The method includes: presenting, in an information presentation page of a target user, work information of the target user and user information of a first category of a plurality of categories of user information, respective category labels corresponding to the plurality of categories of user information being presented in the information presentation page; and switching, in response to detecting a first switching for user information, from the user information of the first category to user information of a second category in the information presentation page, with the presentation of the work information maintained.

In a second aspect of the present disclosure, there is provided an apparatus for information presenting. The apparatus includes: an information presentation module configured to present, in an information presentation page of a target user, work information of the target user and user information of a first category of a plurality of categories of user information, respective category labels corresponding to the plurality of categories of user information being presented in the information presentation page; and an information switching module configured to, switch, in response to detecting a first switching for user information, from the user information of the first category to user information of a second category in the information display page, with the presentation of the work information maintained.

In a third aspect of the present disclosure, there is provided an electronic device. The electronic device includes at least one processing unit; and at least one memory coupled to the at least one processor and storing instructions for execution by the at least one processing unit. The instructions, when executed by the at least one processor, cause the electronic device to perform the method of the first aspect.

In a fourth aspect of the present disclosure, there is provided a computer-readable storage medium. The medium has a computer program stored thereon, and the computer program, when executed by a processor, implements the method in the first aspect.

It would be appreciated that the content described in this section is neither intended to define key or essential features of the embodiments of the present disclosure, nor is it intended to limit the scope of the present disclosure. Other features of the present disclosure will be readily understood through the following descriptions.

### BRIEF DESCRIPTION OF DRAWINGS

The above and other features, advantages and aspects of various embodiments of the present disclosure will become more apparent in combination with the accompanying drawings and with reference to the following detailed descriptions. In the accompanying drawings, the same or similar reference symbols refer to the same or similar elements, where:
FIG. 1 illustrates a schematic diagram of an example environment in which embodiments of the present disclosure can be implemented;
FIG. 2 illustrates a schematic diagram of an example of a conventional information presentation page;
FIG. 3A to FIG. 3E illustrate schematic diagrams of an example of an information presentation page according to some embodiments of the present disclosure, respectively;
FIG. 4 illustrates a flowchart of a process for information presenting according to some embodiments of the present disclosure;
FIG. 5 illustrates a block diagram of an apparatus for information presenting according to some embodiments of the present disclosure; and
FIG. 6 illustrates an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for purposes of example only and are not intended to limit the scope of the present disclosure.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

It would be appreciated that the data involved in the technical solution (including but not limited to the data itself, the obtaining or use of the data) should follow the requirements of the corresponding laws and regulations and related provisions.

It can be understood that, before using the technical solutions disclosed in the embodiments of the present disclosure, a user should be informed of the type, the scope of use, the use scenario, and the like of user information involved in the present disclosure in accordance with the relevant laws and regulations in an appropriate fashion, and the authorization of the user should be obtained.

For example, in response to receiving an active request from the user, prompt information is sent to the user to expressly prompt the user that an operation that the user requests to perform needs to obtain and use the user information of the user, in order to enable the user to choose, according to the prompt information, whether to provide the user information to software or hardware such as an electronic device, an application, a server or a storage medium that performs the operations of the technical solutions of the present disclosure.

As an optional but non-limiting implementation, in response to receiving the active request from the user, a fashion of sending the prompt information to the user may be, for example, a fashion of a pop-up window in which the prompt information may be presented in a text fashion. In addition, the pop-up window may further carry selection controls for the user to choose "agree" or "disagree" to provide the personal information to the electronic device.

It can be understood that the foregoing procedure of notifying and obtaining the user authorization are merely illustrative, and do not constitute a limitation on implementations of the present disclosure, and other manners complying with the relevant laws and regulations may be applied in the implementations of the present disclosure.

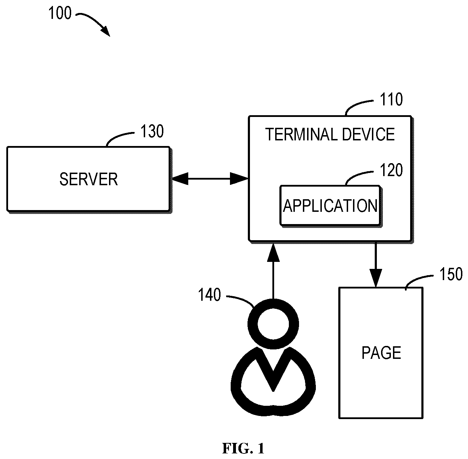

FIG. 1 illustrates a schematic diagram of an example environment 100 in which embodiments of the present disclosure can be implemented. In this example environment 100, a terminal device 110 has an application 120 installed therein. A user 140 may interact with the application 120 via the terminal device 110 and/or an attachment device of the terminal device 110. The application 120 may be a content sharing application capable of providing various services related to the media content to the user 140, including browsing, commenting, forwarding, creating (e.g., shooting and/or editing), posting, and the like. As used herein, "media content" includes one or more types of content, for example a video, an image, an animated image, an image set, audio, a text, and the like.

In the environment 100 of FIG. 1, the terminal device 110 may present a page 150 of the application 120 if the application 120 is active. The page 150 may include various pages that the application 120 may provide, such as an information presentation page, a content creating page, a content posting page, a message page, a personal homepage, and the like. The application 120 may provide a content browsing function for browsing various types of content posted in the application 120. The application 120 may also provide a content creating function, including shooting, uploading, editing, and/or posting a media content. The application 120 may also provide an interacting function, including interacting with other users (for example, adding friends) and interacting with various types of content (including giving likes, favorites, comments, and so on to a content).

In some embodiments, the terminal device 110 communicates with a server 130 to enable provisioning of a service for the application 120. The terminal device 110 may be a mobile terminal, a fixed terminal, or a portable terminal of any type, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support a user-specific interface (e.g., a "wearable" circuit, etc.) of any type. The server 130 may be various types of computing systems/servers capable of providing computing power, including, but not limited to, a mainframe, an edge computing node, a computing device in a cloud environment, and the like.

It should be understood that the structures and functions of the various elements in the environment 100 are described for purposes of example only and do not imply any limitation to the scope of the present disclosure.

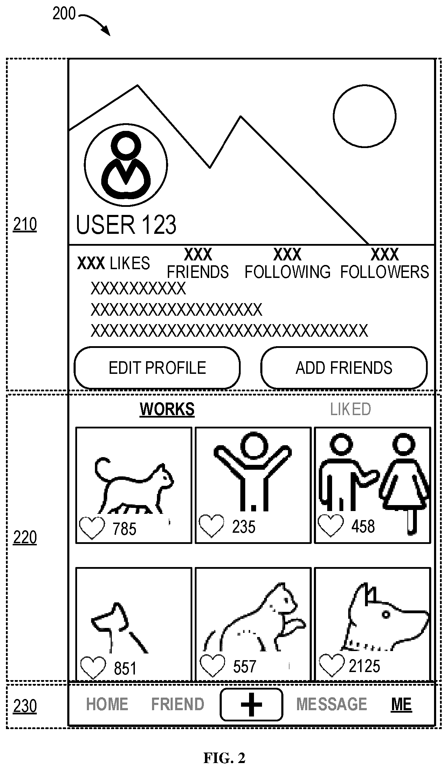

Generally, the application 120 may provide a specific information presentation page related to a user (e.g., a personal homepage) for presenting information associated with the user. FIG. 2 illustrates a schematic diagram of an example of a conventional information presentation page 200.

As shown in FIG. 2, the conventional information presentation page 200 is generally divided into two regions, including a region 210 presenting user information and a region 220 presenting work information. In some applications, the information presentation page 200 may further include a region 230 for presenting a plurality of page entry controls associated with different pages, which may also be referred to as a label of a page, a navigation label, a Tab, and the like.

In the conventional information presentation page as shown in FIG. 2, it can be seen that all user information of the user is presented together in the region 210. In one aspect, a current user (e.g., User 123) of the information presentation page 200, may need to search carefully for a part of the large amount of information in this region 210 that he/she individual requires for processing, configuring, or operating. Sometimes, limited by the size of an region, many functions or information may be displayed in a collapsing manner, or may be placed into other pages, so that the current user may need a longer access path to access. Alternatively, if the region 210 is enlarged to present more user information, the size of the region 220 presenting the work related information will be squeezed so that the number of media content that can be viewed simultaneously by the user may be reduced. On the other hand, the user information may include some information invisible to a guest user, and this part of information may be hidden when the information presentation page is presented to the guest user. Therefore, the current user usually may not clearly perceive the page view that can be viewed by the guest user. Therefore, it may be desirable to improve the approach of interaction and information presenting of the information presentation of the user.

According to embodiments of the present disclosure, there is provided an improved solution for information presenting. In this solution, work information of a target user and user information of a first category of a plurality of categories of user information are presented in the information presentation page of the target user. Respective category labels corresponding to the plurality of categories of user information are presented in the information presentation page. In response to detecting switching for user information, user information of a second category is switched to be presented on the information presentation page, with the presentation of the work information maintained. Therefore, it may switch to the category of the presented user information by the switching for the user information. This may be benefit for the user to view different categories of user information based on their own demands. In this way, the presentation of the user information may be more reasonable, so that the user may be able to quickly browse the information on the presentation page of the related information, and obtain a better browsing experience.

Some example embodiments of the present disclosure will be described below with reference to the accompanying drawings.

In embodiments of the present disclosure, the terminal device 110 presents the work information of the target user and the user information of the first category of the plurality of categories of user information in the information presentation page of the target user. The target user may be, for example, the user 140 corresponding to the terminal device 110. For example, the target user is a user that has logged in to the application 120. The target user is accessing his own information presentation page. In some embodiments, the information presentation page may include a personal homepage of the target user or other pages that present personal-related information. For the user information, the number of categories of the plurality of divided categories may be, for example, 2, 3, or the like, which is not limited in the present disclosure. For the purpose of convenient description, only uses user information of two categories is provided in the following for purposes of example.

In some embodiments, different categories may be divided according to an accessibility attribute of the user information. In this way, multiple categories of user information may have different accessibility attributes. By taking user information with two categories as an example, the user information of a first category may be user information that is accessible to both the target user and other users, and the user information of a second category may be user information that is accessible to the target user and inaccessible to other users. The respective category labels corresponding to the plurality of categories of user information herein are presented in the information presentation page. For example, the category label of the user information of the first category may be "my homepage", and the category label of the user information of the second category may be "personal center", or vice versa.

In some embodiments, alternatively or in addition, different categories of user information among the plurality of categories of user information may be divided based on their corresponding importance levels. That is, the different categories of user information may have different importance levels. For example, user information of a first category may be user information with a lower importance level, and user information of a second category may be user information with a higher importance level, or vice versa.

In embodiments of the present disclosure, the terminal device 110 switches from the user information of the first category into the user information of the second category in the information presentation page in response to detecting a first switching for the user information, with the presentation of the work information maintained. In some embodiments, the first switching here may be, for example, a sliding for a presentation region of the user information. For example, the terminal device 110 may switch to present the user information of the second category in response to detecting such a sliding. It should be noted that only the user information presented in the information presentation page is switchable here, and the work information is not switchable.

In some embodiments, the first switching may also be, for example, a click on respective category labels corresponding to the plurality of categories of user information. In this case, such a category label may also be considered as a switching control associated with the corresponding category of the user information. That is, the category label herein may also be used for switching between different categories of the user information. For example, the terminal device 110 may switch to present the user information of the second category corresponding to the label "personal center" in response to detecting a click on the label "personal center".

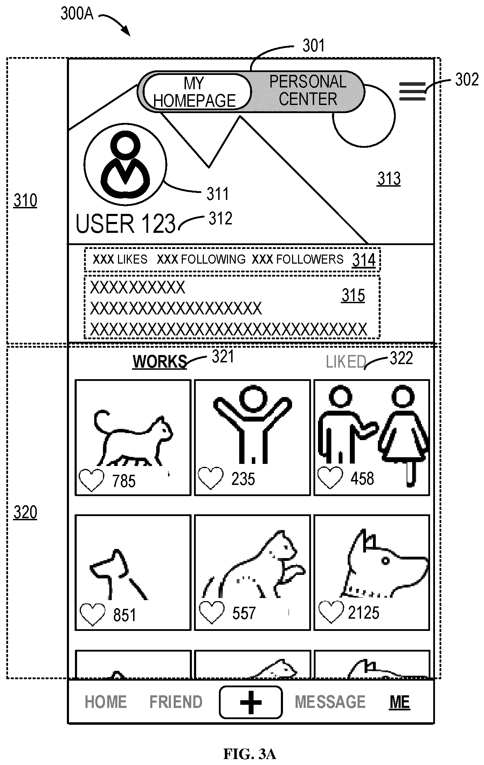

FIG. 3A to FIG. 3E illustrate schematic diagrams of examples of information presentation pages according to some embodiments of the present disclosure, respectively. It should be understood that the pages in FIGS. 3A-3E and pages in other figures that will be described herein below are merely example pages, and actually there may be various page designs. Individual graphical elements in a page may have different arrangements and different visual representations, one or more of which may be omitted or replaced, and one or more other elements may also be present. The embodiments of the present disclosure are not limited in this respect.

As shown in FIG. 3A, there is the work information of the target user and the user information of the first category in the plurality of categories of the user information presented in the information presentation page 300A. In some embodiments, the information presentation page 300A may include multiple regions where different regions are used for presenting different information. As shown in FIG. 3A, information presentation page 300A includes a region 310 and a region 320. The user information is presented in the region 310, which may also be referred to as a first region. The work information is presented in the region 320, which may also be referred to as a second region. Regarding the positional relationship of the region 310 and the region 320, in some embodiments, the region 310 may be located above the region 320. Alternatively or in addition, the region 310 may also be located on other directions to the region 320, such as under the region 320. In some embodiments, the regions 310 and 320 may also be arranged left to right, and the region 310 may be located on the left region 320, or vice versa.

Additional details regarding the region 310 will be described in detail hereinafter, the region 320 is first introduced herein. In some embodiments, the work information of the target user presented in the region 320 may include work information of a plurality of categories, and the number of categories of the work information is not limited in the present disclosure. Taking work information including two categories as an example, the work information of the two categories may be media content posted or uploaded by the target user and media content interacted with by the target user. It would be appreciated that more categories may also be included, for example, more categories may be obtained by subdividing the two categories. For example, the media content posted or uploaded by the user may be subdivided into multiple categories of work information including public media content posted or uploaded by the target user, media content posted or uploaded and set as private by the target user, and the like. For example, the media content interacted with the target user may be subdivided into work information of multiple categories such as media content that liked by the target user, media content favorited by the target user, media content where the target user is mentioned. As shown in FIG. 3A, the region 320 presents two categories of the work information including the work information of the "work" category and work information of the "liked" category.

In some embodiments, the terminal device 110 may switch from the work information of the first category to the work information of the second category in the information presentation page, in response to detecting a second switching for the work information. In some embodiments, the second switching here may be, for example, a sliding for a presentation region of the work information, that is, a sliding for the region 320. For example, the terminal device 110 may switch to present the work information of the second category in response to detecting such a sliding. It should be noted that only the work information presented in the region 320 may be switched, and the user information presented in the region 310 may not be switched.

In some embodiments, the second switching may also be, for example, a click on a respective category label corresponding to the plurality of categories of work information. Specifically, the region 320 may also be presented with respective category labels corresponding to the plurality of categories of work information. As shown in FIG. 3A, the region 320 may further include a category label 321 and a category label 322. The category label 321 and the category label 322 may also be considered as switching controls associated with corresponding categories of work information. The terminal device 110 may switch to present the user information of the "work" category corresponding to the category label 321 in response to detecting a click on the category label 321. The terminal device 110 may switch to present the user information of the "like" category corresponding to the category label 322 in response to detecting a click on the category label 322. It would be appreciated that FIG. 3A only illustrates an example of presenting two categories of category labels, but the region 320 may present more category labels, which is not limited in the present disclosure.

In some embodiments, the information presentation page 300A is further presented with a label control 301 for the region 310. The label control 301 may be presented with respective category labels corresponding to the plurality of categories of user information. As shown in FIG. 3A, the label control 301 is presented with a label "my homepage" and a label "personal center".

It should be noted that although the label control 301 is associated with the region 310, the presentation position of the label control 301 in the information presentation page 300A is independent of the region 310. FIG. 3A illustrates an example in which the label control 301 is presented on an upper side of the information presentation page 300A, where it should be understood that the label control 301 may also be presented anywhere (e.g., on a lower side, a left side , a right side, or the like) of the information presentation page 300A. Alternatively or in addition, in some embodiments, the information presentation page 300A may also directly present respective category labels corresponding to the plurality of categories of user information without presenting the label control 301.

In some embodiments, the presentation position, a presentation size, a presentation color, a presentation style, and the like of the label control 301 in the information presentation page 300A may be preset. Specifically, these may be pre-set and input by the user to the terminal device 110, or may be determined by the terminal device 110 based on historical data of the user. In this way, personalized presentation of the label control 301 may be implemented.

In some embodiments, the information presentation page 300A may also be presented with a setting control 302. The terminal device 110 may present an editing entry or an editing interface for editing information in response to receiving a trigger for the setting control 302, and correspondingly modify the information presented by the information presentation page 300A in response to the input of the user. For example, the target user may set the user information presented in the region 310 using the editing entry or the editing interface triggered via the setting control 302. Similar to the label control 301, the presentation position, a presentation size, a presentation color, a presentation style, and the like of the setting control 302 in the information presentation page 300A may be preset.

With respect to the region 310, FIG. 3A illustrates an example where user information of the first category (e.g., the user information of the category "my homepage") is currently presented in region 310. In some embodiments, the user information of the first category is user information visible to both the target user and other users. In this case, the user information of the first category may include user profile information of the target user. The user profile information herein may include at least one of, for example, basic information of the target user (for example, a user name, a data introduction of the user, etc.), social information of the target user (for example, a number of likes to the works, a number of followings, a number of followers, a number of friends, etc.), a user avatar, or a background image. As shown in FIG. 3A, the user information of the first category presented in the region 310 includes a user avatar 311 of the target user, a user name 312, a background image 313, social information 314, and a user profile 315. It should be noted that here, the number of "likes" is used to indicate a total number of likes of the works of the user. The total number of likes may be considered to be interaction information related to the target user (e.g., when there is a new like, the user may be nidificated in an interaction message), and may be considered as a part of the user profile (as the number of likes of the work benefits to characterize this user).

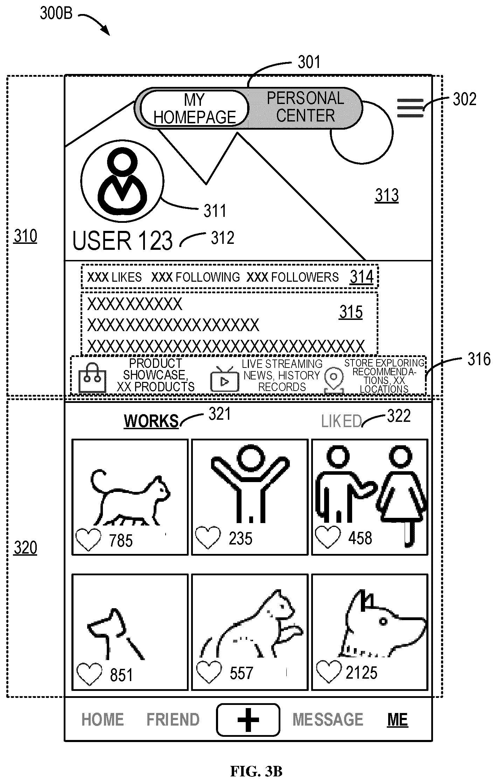

In some embodiments, when the target user is a user with a promotion attribute, such as a live streamer, a store owner, a brand holder, or the like, the user information of the first category may further include an access entry corresponding to a promotion service that may be provided by the target user. FIG. 3B illustrates an example where the region 310 presents the user information of the first category that includes an access entry. As shown in FIG. 3B, the user information of the first category presented in the region 310 in the information presentation page 300B may further include at least one access entry 316. The at least one access entry 316 may include, for example, a product showcase access entry, a live streaming news access entry, and a store exploring recommendations access entry. It would be appreciated that the at least one access entry 316 may further include more or less access entries, which is not limited in the present disclosure.

In some embodiments, the terminal device 110 may switch the information presented in the region 310 in response to detecting a click on a category label in the tag control 301 and/or a sliding on the region 310. For example, when the information presented in the region 310 is the user information of the first category, the terminal device 110 may switch the user information presented in the region 310 to the user information of the second category (for example, the user information of the category "personal center") in response to detecting the sliding on the region 310 or the click on the label "personal center". When the information presented in the region 310 is the user information of the second category, the terminal device 110 may switch the user information presented in the region 310 to the user information of the first category in response to detecting a sliding on the region 310 or a click on the label "my homepage".

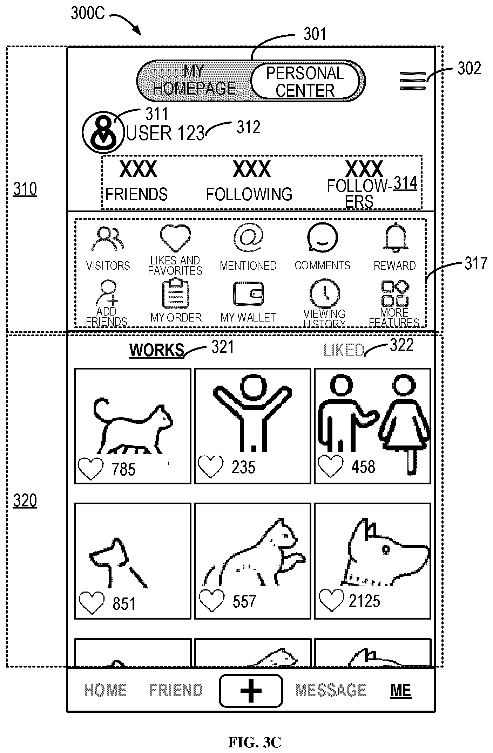

FIG. 3C illustrates an example of switching information presented in the region 310 to be the user information of the second category. As shown in FIG. 3A and FIG. 3C, in some embodiments, the terminal device 110 may switch to present an information presentation page 300C in response to detecting a click on the label "personal center" in the information presentation page 300A. The information presented in the region 310 in the information presentation page 300C is the user information of the second category. In some embodiments, with the switching of the information presented in the region 310, the terminal device 110 may also adjust the presentation style of the label control 301. For example, the terminal device 110 may switch the background color of the label "personal center" to a light color, and switch the background color of the label "my homepage" to a dark color. In some embodiments, the terminal device 110 may not adjust the presentation style of the setting control 302 with the switching of the information presented in the region 310.

In some embodiments, the terminal device 110 may maintain the information presented in the region 320 unchanged during the switching of the information presented in the region 310. As shown in FIG. 3A and FIG. 3C, the work information of the target user presented in the region 320 is maintained unchanged while the region 310 is switching from presenting the user information of the first category to presenting the user information of the second category. It can be understood that the same way works when the region 310 is switched from presenting the user information of the second category to presenting the user information of the first category.

In some embodiments, if the size of the region occupied by the user information of the second category is different from the size of the region occupied by the user information of the first category, the terminal device 110 may further scale the region 319 to present the user information of the second category in the scaled region 310. For example, if a length of a region needed for the user information of the second category is *a,* a length of a region needed for the user information of the first category is *b,* and *a>b,* then in response to detecting the switching from presenting the user information of the first category to presenting the user information of the second category, the terminal device 110 may extend the length of the region 310 in such a way that the information of the second category is presented in the region 310. Therefore, a proportion of the region 310 in the information presentation page can be flexibly adjusted, so that the proportion of the region used for presenting the media content may be adjusted, and a number of the media content that the user can view at the same time can be flexibly increased, the media content can be conveniently checked, and the viewing efficiency and the frequency of the media content can be improved.

In some embodiments, the category of the user information presented in the switched region 310 is user information that is not visible to the other users than the target user. In this case, the user information of the second category may include, for example, user service information of the target user. In some embodiments, the user information of the second category may further include some information in the user profile information. For example, the user information of the second category may further include a user avatar, a user name, social information of the target user, and the like. As shown in FIG. 3C, the region 310 switched to presenting the user information of the second category includes a user avatar 311, a user name 312, social information 314, and user service information 317. In the example shown in FIG. 3C, the user service information 317 may include, for example, at least one of an access entry corresponding to at least one type of interactive service (for example, an access entry corresponding to a visitor, an access entry corresponding to the likes and favorites, an access entry corresponding to mentioned, an access entry corresponding to the comments, a more multifunctional corresponding access entry, an access entry corresponding to the viewing history, etc. ), or a service function accessible or configurable by the target user (for example, a service function for adding a friend), or a digital asset service of the target user (for example, a reward service, my order service, my wallet service, etc. ). It would be appreciated that FIG. 3C only shows some examples of the user service information 317, and the present disclosure does not limit the specific content of the user service information. Depending on particular application needs, more, less, or other different user service information may also be presented.

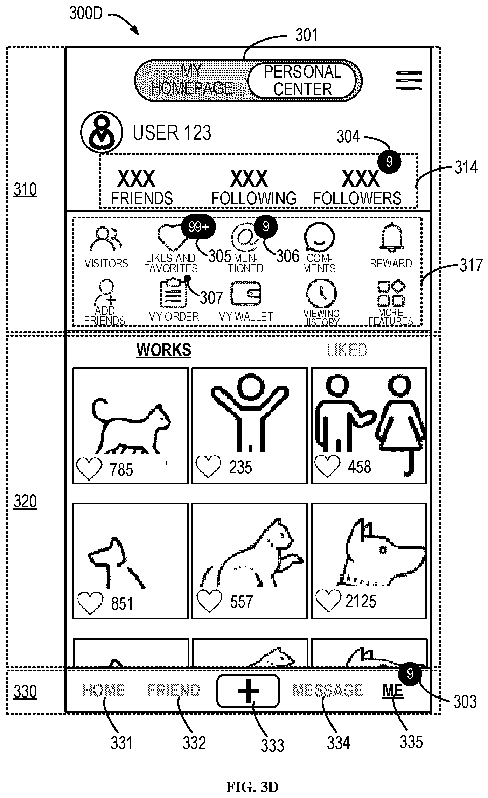

In some embodiments, in a case that the region 310 presents the user information of the second category, the terminal device 110 may further present a message reminder for the interactive message of the target user. The message reminder may indicate a number of unread messages. As shown in FIG. 3D, a message reminder 304, a message reminder 305, a message reminder 306, and a message reminder 307 are presented in the region 310. The message reminder 304 may indicate, for example, that the number of unread messages of messages from followers is 9. In some embodiments, the message reminders in the region 310 may be of the same style (e.g., all are presented with a numerical red-dot style as shown by the message reminder 304). In some embodiments, the message reminders in region 310 may also be different styles. For example, presentation styles of the message reminder 304, the message reminder 305, and the message reminder 306 are all with the numerical red-dot style, while a presentation style of the message reminder 307 is with a common red-dot style.

As shown in FIG. 3D, in some embodiments, the information presentation page 300D further includes an region 330 for presenting a plurality of page entry controls associated with different pages. The region 330 may also be referred to as a navigation bar. The plurality of page entry controls presented in the region 330 may include a page entry control 331, a page entry control 332, a page entry control 333, a page entry control 334, and a page entry control 335. The terminal device 110 may present the message reminder 303 at the page entry control 335 associated with the information presentation page 300D. A number in the message reminder 303 may indicate, for example, a total number of all types of unread messages in the region 310, or a number of unread messages of a particular type in the region 310 (e.g., only indicating that the number of unread messages of messages from followers is 9). In some embodiments, the style of the message reminder in the information presentation page 300D may also be preset by the user, or determined autonomously by the terminal device 110 based on the number of messages.

With respect to the plurality of page entry controls described above, in some embodiments, the terminal device 110 may switch to present a content browsing page for displaying media content in response to receiving a trigger for the page entry control 331. The terminal device 110 may switch to present a friend post page for presenting friend posts in response to receiving a trigger for the page entry control 332. The terminal device 110 may switch to present the content creating page for creating media content in response to receiving a trigger for the page entry control 333. The terminal device 110 may switch to present the message page for presenting the interaction information and the session information in response to receiving a trigger for the page entry control 334. When the terminal device 110 presents other pages than the information presentation page 200, the terminal device 110 may switch to present the information presentation page 200 in response to receiving a trigger for the page entry control 335.

In some embodiments, the terminal device 110 may further determine information that is presented by default in the region 310. In some embodiments, when the information presentation page of the target user is accessed by the target user, user information not visible to the other users than the target user and respective category labels corresponding to the plurality of categories of user information are presented by default in the information presentation page. That is, when the information presentation page of the target user is accessed by the target user, the terminal device 110 may directly determine the user information of the second category as the default presented information in the region 310. The terminal device 110 may directly present the user information of the second category in the region 310 in response to the information presentation page being triggered to be presented by the target user. The terminal device 110 may further, when the target user wants to view the user information of the first category, in response to receiving the click on the category label corresponding to the user information of the first category in the label control 301, switch the user information presented in the region 310 to present the user information of the first category. For example, the terminal device 110 may directly present the information presentation page 300C as shown in FIG. 3C or the information presentation page 300D as shown in FIG. 3D in response to the information presentation page being triggered to be presented by the target user. The terminal device 110 may, in turn, switch to present the information presentation page 300A as shown in FIG. 3A or the information presentation page 300B as shown in FIG. 3B in response to receiving a trigger on the label "my homepage" in the label control 301. In this way, the terminal device 110 may preferentially present the user information of the second category with higher importance, which helps improve the efficiency of accessing the user service information by the user. In addition, because the information presentation page presents the user service information by default, the work information of the user may also be presented, which may improve the correlation between the user service information and the work information of the user. This helps to improve the enthusiasm of the targeted user for posting or uploading the media content.

In some embodiments, the terminal device 110 may further determine the user information of the first category as the default presented information in the region 310. That is, the terminal device 110 may directly present the user information of the first category in the region 310 in response to the information presentation page being triggered to be presented by the target user.

In some embodiments, the terminal device 110 may further based on the setting of the target user or based on the historical information browsing of the target user, determine the user information that is presented by default in the region 310. For example, if the region 310 stays in presenting the user information of the first category when the target user last accesses the information presentation page and exits, and then the user information of the first category may be determined as the default presented information. When the terminal device 110 receives the access request for the information presentation page next time, in response to the information presentation page being triggered to be presented by the target user, the terminal device 110 directly presents the user information of the first category in the region 310. Similarly, if the region 310 stays in presenting the user information of the second category, the region 310 presents the user information of the second category by default when next time being visited.

The foregoing describes examples in which the target user accesses the information presentation page of the target user, and the following will describe examples of the information presentation page of the target user accessed by the other users than the target user (also referred to as a visitor user). In some embodiments, the user information of the first category is user information visible to both the target user and the other users, and the user information of the second category includes user information not visible to the other users than the target user. It would be appreciated that the user information of the first category may be presented to other users, while the user information of the second category may not be presented to the other users. Therefore, while the information that is invisible to the visitor user in the user information is hidden, the target user can intuitively determine the page view displayed to the visitor user based on the information presentation page that presents the user information of the first category that can be viewed by the target user.

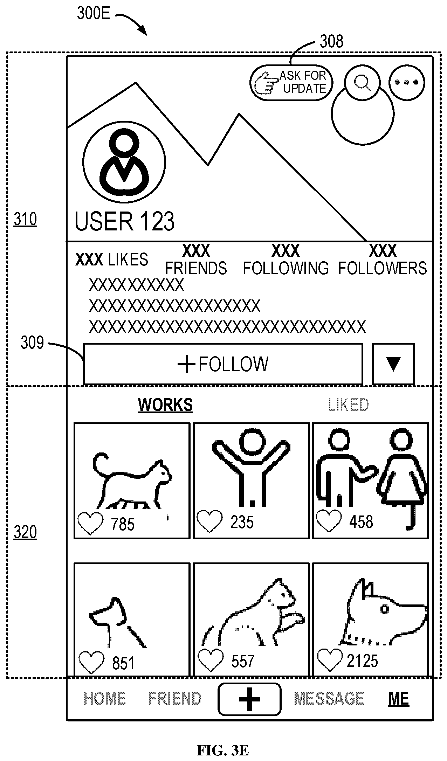

In some embodiments, if the information presentation page of the target user is accessed by another user, the user information visible to both the target user and the other user is presented by default in the information presentation page, and the respective category labels corresponding to the plurality of categories of the user information are not presented. That is, if the information presentation page of the target user is accessed by the other user, the user information of the first category is presented in the region 310 without presenting the user information of the second category and the label control 301. As shown in FIG. 3E, for anther user than the target user, the information presentation page 300E of the target user presents, in the region 310, the user information of the first category including basic information of the target user, social information of the target user, a user avatar, a background image, and the like.

In some embodiments, the information presentation page 300E further includes an ask for update control 308. Other users may send a prompt message to the target user to remind the target user to post or upload the media content by triggering the asking for update control 308. In some embodiments, if the other users accessing the information presentation page 300E do not follow the target user, the information presentation page 300E may further include a follow control 309. Other users may focus on the target user by triggering the follow control 309. It would be appreciated that, if other users accessing the access information display page 300E have followed the target user, the follow control 309 may not be included in the information display page 300E.

In summary, according to example embodiments of the present disclosure, the category of the presented user information may be switched by the switching for the user information. This helps the user view different categories of user information based on their own requirements. In this way, the presentation of the user information may be more reasonable, so that the user can quickly browse the information on the presentation page of the related information, and achieve better browsing experience.

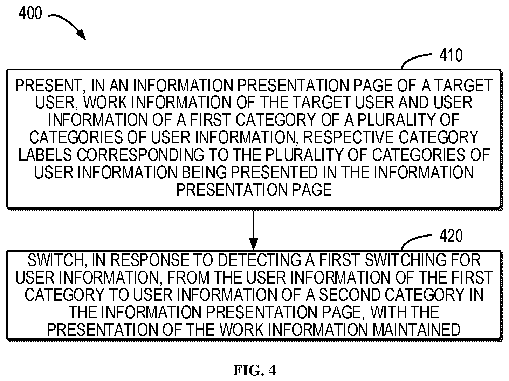

FIG. 4 illustrates a flowchart of a process 400 for information presenting according to some embodiments of the present disclosure. The process 400 may be implemented at the terminal device 110. The process 400 is described below with reference to FIG. 1.

At block 410, the terminal device 110 presents, in an information presentation page of a target user, work information of the target user and user information of a first category of a plurality of categories of user information, respective category labels corresponding to the plurality of categories of user information being presented in the information presentation page.

At block 420, the terminal device 110 switches in response to detecting a first switching for user information, from the user information of the first category to user information of a second category in the information presentation page, with the presentation of the work information maintained.

In some embodiments, the user information is presented in a first region of the information presentation page, and the work information is presented in a second region of the information presentation page.

In some embodiments, switching the user information of the first category to the user information of the second category includes: in response to a size of a region occupied by the user information of the second category being different from a size of a region occupied by the user information of the first category, scaling the first region to present the user information of the second category in a scaled first region.

In some embodiments, the first region is located above the second region.

In some embodiments, the plurality of categories of user information includes at least one of: user information visible to both the target user and other users, or user information that is not visible to other users than the target user.

In some embodiments, in accordance with the information presentation page of the target user is accessed by the other users, the user information visible to both the target user and the other users is presented by default in the information presentation page, without presenting respective category labels corresponding to the plurality of categories of user information.

In some embodiments, in accordance with the information presentation page of the target user is accessed by the target user, user information not visible to the other users than the target user and respective category labels corresponding to the plurality of categories of user information are presented by default in the information presentation page.

In some embodiments, user information presentable to the target user and the other users includes user profile information of the target user, and/or the user information that is not visible to other users than the target user includes user service information for the target user.

In some embodiments, the user service information includes at least one of: an access entry corresponding to at least one type of interactive service, a service function accessible to or configurable by the target user, or a digital asset service for the target user.

In some embodiments, the first switching for the user information includes: a sliding on a presentation region of the user information, or a click on a category label corresponding to the user information of the second type.

In some embodiments, the work information includes a plurality of categories of work information, and respective category labels corresponding to the plurality of categories of work information are presented in the information presentation page, and the process 400 further includes: in response to detecting the second switching for the work information, switching from the work information of the first category to the work information of the second category in the information presentation page.

In some embodiments, the second switching for the work information includes: a sliding on a presentation region of the work information, or a click on a category label corresponding to the work information of the second category.

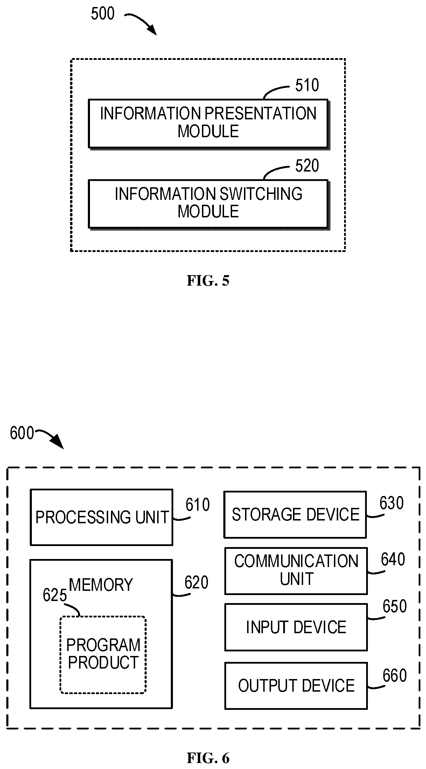

FIG. 5 illustrates a schematic structural block diagram of an apparatus 500 for information presentation according to some embodiments of the present disclosure. The apparatus 500 may be implemented or included in the terminal device 110. The various modules/components in the apparatus 500 may be implemented in hardware, software, firmware, or any combination thereof.

As shown in the figure, the apparatus 500 includes an information presentation module 510 configured to present, in an information presentation page of a target user, work information of the target user and user information of a first category of a plurality of categories of user information, respective category labels corresponding to the plurality of categories of user information being presented in the information presentation page. The apparatus 500 further includes an information switching module 520 configured to switch, in response to detecting a first switching for user information, from the user information of the first category to user information of a second category in the information display page, with the presentation of the work information maintained.

In some embodiments, the user information is presented in the first region of the information presentation page, and the work information is presented in the second region of the information presentation page.

In some embodiments, the information switching module 520 includes a region scaling module configured to, if the size of the region occupied by the user information of the second category is different from the size of the region occupied by the user information of the first category, scale the first region to present the user information of the second category in the scaled first region.

In some embodiments, the first region is located above the second region.

In some embodiments, the plurality of categories of user information includes at least one of: user information visible to both the target user and other users, and user information not visible to other users other than the target user.

In some embodiments, in accordance with the information presentation page of the target user is accessed by the other users, the user information visible to both the target user and the other users is presented by default in the information presentation page, without presenting respective category labels corresponding to the plurality of categories of user information.

In some embodiments, in accordance with the information presentation page of the target user is accessed by the target user, user information not visible to the other users than the target user and respective category labels corresponding to the plurality of categories of user information are presented by default in the information presentation page.

In some embodiments, user information that may be presented to the target user and the other users includes user profile information for the target user, and/or user information that is not visible to the other users than the target user includes user service information of the target user.

In some embodiments, the user service information includes at least one of: an access entry corresponding to at least one type of interactive service, a service function accessible to or configurable by the target user, or a digital asset service for the target user.

In some embodiments, the first switching for the user information includes: a sliding on a presentation region of the user information, or a click on a category label corresponding to the user information of the second category.

In some embodiments, the work information includes a plurality of categories of the work information, and respective category labels corresponding to the plurality of categories of the work information are presented in the information presentation page, and the apparatus 500 further includes: a second switching module, configured to switch, in response to detecting the second switching for the work information, the work information of the first category currently presented in the information presentation page to work information of a second category.

In some embodiments, the second switching for the work information includes: a sliding on a presentation region of the work information, or a click on a category label corresponding to the work information of the second category.

FIG. 6 illustrates a block diagram of an electronic device 600 in which one or more embodiments of the present disclosure may be implemented. It should be understood that the electronic device 600 illustrated in FIG. 6 is merely illustrative and should not constitute any limitation on the functionality and scope of the embodiments described herein. The electronic device 600 shown in FIG. 6 may be configured to implement the terminal device 110 in FIG. 1 or the apparatus 500 in FIG. 5.

As shown in FIG. 6, the electronic device 600 is in the form of a general-purpose computing device. Components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and capable of performing various processes according to programs stored in the memory 620. In a multiprocessor system, multiple processing units execute computer-executable instructions in parallel to improve a parallel processing capability of the electronic device 600.

Electronic device 600 typically includes a plurality of computer storage media. Such media may be any available media accessible to the electronic device 600, including, but not limited to, volatile and non-volatile media, removable and non-removable media. The memory 620 may be a volatile memory (e.g., a register, a cache, a random access memory (RAM)), a non-volatile memory (e.g., read-only memory (ROM), an electrically erasable programmable read-only memory (EEPROM), and a flash memory), or some combination thereof. The storage device 630 may be a removable or non-removable medium and may include a machine-readable medium, such as a flash drive, magnetic disk, or any other medium, which may be capable of storing information and/or data (e.g., training data for training) and may be accessed within the electronic device 600.

The electronic device 600 may further include additional removable/non-removable, volatile/non-volatile storage media. Although not shown in FIG. 6, a disk drive for reading from or writing to a removable and nonvolatile magnetic disk (e.g., a "floppy disk") and an optical disk drive for reading from or writing to a removable and nonvolatile optical disk may be provided. In these cases, each drive may be connected to a bus (not shown) by one or more data media interfaces. The memory 620 may include a computer program product 625 having one or more program modules configured to perform various methods or actions of various embodiments of the present disclosure.

The communication unit 640 is configured to communicate with another electronic device through a communication medium. Additionally, the functionality of components of the electronic device 600 may be implemented in a single computing cluster or multiple computing machines capable of communicating over a communication connection. Thus, the electronic device 600 may operate in a networked environment using logical connections with one or more other servers, network personal computers (PCs), or another network node.

The input device 650 may be one or more input devices such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed, external devices such as storage devices, display devices, etc. , communicate with one or more devices that enable a user to interact with the electronic device 600, or communicate with any device (e.g., a network card, a modem, etc. ) that enables the electronic device 600 to communicate with one or more other electronic devices. Such communication may be performed via an input/output (I/O) interface (not shown).

According to example embodiments of the present disclosure, there is provided a computer-readable storage medium having computer-executable instructions stored thereon, where the computer-executable instructions are executed by a processor to implement the method described above. According to example embodiments of the present disclosure, there is further provided a computer program product, where the computer program product is tangibly stored on a non-transient computer readable medium and includes computer executable instructions, the computer executable instructions being executed by a processor to implement the method described above.

Various aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, the apparatus is generated for implementing the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement various aspects of the functions/acts specified in one or more blocks in the flowchart and/or block diagram (s).

The computer-readable program instructions may be loaded onto a computer, other programmable data processing apparatus, or other apparatus, such that a series of operational steps are executed on the computer, the other programmable data processing apparatus, or the other apparatus to produce a computer-implemented process such that the instructions executed on the computer, the other programmable data processing apparatus, or the other apparatus implement the functions/acts specified in in one or more blocks the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are examples, not exhaustive, and are not limited to the implementations disclosed. Many modifications and variations will be apparent to those of ordinary skilled in the art without departing from the scope of the various implementations illustrated. The selection of the terms used herein is intended to best explain the principles of the implementations, the practical application, or improvements to the technology in the marketplace, or to enable others of ordinary skilled in the art to understand the various embodiments disclosed herein.

## Claims

1. A method for information presenting comprising:
presenting, in an information presentation page of a target user, work information of the target user and user information of a first category of a plurality of categories of user information, respective category labels corresponding to the plurality of categories of user information being presented in the information presentation page; and
switching, in response to detecting a first switching for user information, from the user information of the first category to user information of a second category in the information presentation page, with the presentation of the work information maintained.

2. The method of claim 1, wherein the user information is presented in a first region of the information presentation page and the work information is presented in a second region of the information presentation page.

3. The method of claim 2, wherein switching the user information of the first category to the user information of the second category comprises:
scaling, in response to a size of a region occupied by the user information of the second category being different from a size of a region occupied by the user information of the first category, the first region to present the user information of the second category in a scaled first region.

4. The method of claim 2, wherein the first region is located above the second region.

5. The method of claim 1, wherein the plurality of categories of user information comprises at least one of:
user information visible to both the target user and another user, or
non-work related information that is not visible to the other user than the target user.

6. The method of claim 5, wherein in accordance with the information presentation page of the target user is accessed by the other user, the user information visible to both the target user and the other user is presented by default in the information presentation page, without presenting respective category labels corresponding to the plurality of categories of user information.

7. The method of claim 5, wherein in accordance with the information presentation page of the target user is accessed by the target user, user information not visible to the other user than the target user and respective category labels corresponding to the plurality of categories of user information are presented by default in the information presentation page.

8. The method of claim 5, wherein the non-work related information presentable to the target user and the other user comprises user profile information of the target user, and/or
wherein the non-work related information not visible to the other user than the target user comprises user service information of the target user.

9. The method of claim 8, wherein the user service information comprises at least one of:
an access entry corresponding to at least one type of interactive service,
a service function accessible to or configurable by the target user, or
a digital asset service for the target user.

10. The method of claim 1, wherein the first switching for the user information comprises: a sliding on a presentation region of the user information, or a click on a category label corresponding to the user information of the second type.

11. The method of claim 1, wherein the work information comprises a plurality of categories of work information, and respective category labels corresponding to the plurality of categories of work information are presented in the information presentation page, the method further comprising:
switching, in response to detecting the second switching for the work information, from the work information of the first category to the work information of the second category in the information presentation page.

12. The method of claim 11, wherein the second switching for the work information comprises: a sliding in a presentation region of the work information, or a click on a category label corresponding to the work information of the second category.

13. An apparatus for information presenting, comprising:
an information presentation module configured to present, in an information presentation page of a target user, work information of the target user and user information of a first category of a plurality of categories of user information, respective category labels corresponding to the plurality of categories of user information being presented in the information presentation page; and
an information switching module configured to, switch, in response to detecting a first switching for user information, from the user information of the first category to user information of a second category in the information display page, with the presentation of the work information maintained.

14. An electronic device comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 12.

15. A computer-readable storage medium having a computer program stored thereon, the computer program, when executed by a processor, implementing the method of any of claims 1 to 12.
